# EUROPÄISCHE PATENTSCHRIFT

(11) **EP 1 493 646 B1**
(45) Veröffentlichungstag und Bekanntmachung des Hinweises auf die Patenterteilung: **16.12.2009**
(21) Anmeldenummer: 04015017.9
(22) Anmeldetag: 25.06.2004
(51) Int. Cl.: B62B 7/10

(54) **Kinder- oder Puppenwagen**
Stroller for children or dolls
Voiture d'enfant ou de poupée

(30) Priorität: 03.07.2003 DE 10330207
(43) Veröffentlichungstag der Anmeldung: 05.01.2005
(73) Patentinhaber: Hartan Kinderwagenwerk e.K., 96242 Sonnefeld-Gestungshausen (DE)
(72) Erfinder: Hartan, Rolf, 96242 Sonnefeld (DE); Wittig, Reinhard, 96523 Steinach (DE)
(74) Vertreter: Blaumeier, Jörg

(56) Entgegenhaltungen:
- DE-U1- 20 016 773
- GB-A- 2 204 282
- US-A- 3 075 783
- US-A1- 2003 193 172

## Beschreibung

Die Erfindung betrifft einen Kinder- oder Puppenwagen, mit einem zusammenlegbaren Wagengestell mit Fahrwerk und Schiebebügel, wobei das Wagengestell zwei zusammenlegbare seitliche Gestellabschnitte aufweist.

Ein solcher Kinder- oder Puppenwagen ist beispielsweise aus dem deutschen Gebrauchsmuster 298 19 218 bekannt. Derartige Wagen erfreuen sich zumeist als Kinderwagen in Form eines Sportwagens großer Beliebtheit. Die Zusammenlegbarkeit des Fahrgestells ermöglicht es, den Wagen auch bei geringem Platzangebot problemlos transportieren zu können. Bei bekannten Wagen sind die seitlichen Gestellabschnitte als Scherengestelle ausgebildet, bestehend aus zwei X-förmig gekreuzten, im Kreuzungspunkt miteinander schwenkbar verbundenen Scherenstreben, die unterseitig mit jeweils einem Fahrwerkteil verbunden sind. Am Schiebebügel sind beidseitige Betätigungselemente vorgesehen, über die ein Rastzapfen, der an einer parallel zum Schiebebügel angeordneten, kurzen Befestigungsstrebe beweglich gehaltert ist, bewegbar ist. Dieser Rastzapfen wirkt mit einer entsprechenden Rastaufnahme, die im Bereich der mittigen Gelenkverbindung der beiden Scherenstreben vorgesehen ist, zusammen. Wird ausgehend von der aufgebauten Stellung durch Betätigung der Betätigungselemente am Schiebebügel die Rastverbindung gelöst, so gleitet das untere Ende des Schiebebügels und der Befestigungsstrebe, um ein Drehlager schwenkend, entlang der benachbarten Scherenstrebe ab, die Scherengestelle werden freigegeben und schwenken um die mittige Gelenkverbindung zusammen. Dabei werden die unteren Enden der Scheren - und entsprechend natürlich auch der oberen Enden - auseinandergeführt, d.h. die beiden Fahrwerkteile entfernen sich voneinander. Gleichzeitig wird der Sitz abgesenkt, so dass der zusammengelegte Wagen gegenüber dem aufgebauten Zustand deutlich kleiner ist.

Nachteilig bei der Verwendung der Scherengestelle ist jedoch, dass auch der zusammengelegte Wagen noch beachtlich hoch aufbaut, da die Scherengestelle nicht vollständig zusammengelegt werden können. Darüber hinaus kann, nachdem die unteren Enden der Scherengestelle auseinander bewegt werden, im Bereich des Fahrwerks keine stabile, starre Rahmenkonstruktion vorgesehen werden.

Der deutsche Gebrauchsmusterschrift DE 200 16 773 U1 offenbart einen gattungsgemäßen Kinder- oder Puppenwagen.

Der Erfindung liegt damit das Problem zugrunde, einen Kinderwagen anzugeben, der demgegenüber verbessert ist.

Zur Lösung dieses Problems ist bei einem Wagen der eingangs genannten Art erfindungsgemäß vorgesehen, dass jeder Gestellabschnitt eine erste und eine zweite Strebe aufweist, wobei am unteren fahrwerkseitigen Ende der ersten Strebe ein über ein schiebebügelseitig angeordnetes manuelles Betätigungselement bewegbarer Rastzapfen vorgesehen ist, der in der Raststellung in ein Rastelement greift, wobei die erste und die zweite Strebe derart um einen gemeinsamen oberen Drehpunkt drehbar gelagert sind, dass sie nach Lösen des Rastzapfens beim Zusammenlegen mit ihren unteren Enden auseinander in einen näherungsweise miteinander fluchtende Stellung geschwenkt werden, wobei die erste Strebe über eine schwenkbare Verbindungsstrebe und die zweite Strebe direkt mit einer fahrwerknahen Gestellstrebe gekoppelt sind.

Bei dem erfindungsgemäßen Wagen ist kein Scherengestell mehr vorgesehen, mit dem die eingangs genannten Nachteile verbunden sind. Die Zusammenklappmimik ist demgegenüber völlig anders konzipiert und umfasst zwei Streben, die um einen gemeinsamen oberen Drehpunkt verschwenkbar sind. Beim Zusammenlegen werden diese beiden Streben mit ihren unteren Enden auseinander geschwenkt, so dass sie näherungsweise miteinander fluchtend in der zusammengelegten Stellung positioniert sind, mithin also annähernd hintereinander einer Linie liegend. Im Bereich ihrer unteren Enden ist lediglich eine Strebe direkt mit einer fahrwerknahen, starren Gestellstrebe gekoppelt, während die andere Strebe über eine die sich beim Zusammenlegen durch das Auseinanderschwenken der unteren Strebenenden ergebende Abstandsvergrößerung ausgleichende Verbindungsstrebe gekoppelt ist. Diese schwenkbare Verbindungsstrebe bildet also den erforderlichen Längenausgleich. Dies ermöglicht es, fahrwerknah starre Gestellstreben vorzusehen, so dass dem Wagengestell insgesamt eine größere Stabilität verliehen wird. Dies ist möglich, nachdem durch die erfindungsgemäße Bewegungsmimik die beiden Fahrwerkteile beim Zusammenlegen in ihrer Position verbleiben und nicht mehr wie im Stand der Technik auseinander gefahren werden. Auch lässt sich durch die erfindungsgemäße Klappmimik der Wagen weiter zusammenlegen, nachdem - anders als die bisher verwendeten Scherengestelle - die beiden zentralen Streben annähernd fluchten, mithin also so gering wie möglich in die Höhe aufbauend positioniert werden.

Die beiden Streben sind in Weiterbildung der Erfindung vorteilhaft an einer gemeinsamen, ihre Bewegung bezüglich einander erlaubenden Halterung angeordnet. Dieser Halterung, die die Schwenkbarkeit der Streben ermöglicht, kommt eine zentrale Bedeutung zu, da sie auch gleichzeitig die sichere Fixierung der Streben bezüglich einander sicherstellt, zumal keine weiteren Streben mehr gestellabschnittsseitig vorgesehen sind. Die Halterung selbst umfasst zweckmäßigerweise zwei bezüglich einander verdrehbare scheibenartige Teile, an denen je eine Strebe angeordnet ist, so dass beide bezüglich einander verschwenkbar sind.

Es ist denkbar, den Schiebebügel entweder an einer der Streben zu befestigen, oder an einem Teil der Halterung. In diesem Fall würde der Schwenkbügel starr und unbeweglich sein und beim Zusammenlegen mit der ihn halternden Strebe oder dem scheibenartigen Teil bewegt werden. D.h. auch er würde in eine sehr tiefe, abgesenkte und annähernd horizontale Stellung geführt werden, er baut also ebenfalls nicht allzu sehr auf.

Zweckmäßig ist es jedoch, wenn auch der Schiebebügel ebenfalls um den oberen Drehpunkt der Gestellabschnitte zwischen zwei Stellungen schwenkbar gelagert ist. Die Verschwenkbarkeit des Schiebebügels von einer auf die andere Seite ermöglicht es, das Kind nach vorne, also in Fahrtrichtung blickend oder nach hinten zu der wagenschiebenden Person blickend zu schieben. Ist nun der Schiebebügel ebenfalls um den zentralen oberen Drehpunkt der Gestellabschnitte, um den wie beschrieben auch die beiden Streben drehbar sind, schwenkbar, so ist insgesamt lediglich ein zentraler Schwenk- oder Drehpunkt vorzusehen, um den alle relevanten Teile bewegt werden. Dies ist insbesondere aus konstruktiver Hinsicht sehr vorteilhaft. In diesem Fall ist es zweckmäßig, auch den Schiebebügel an der Halterung aufzunehmen, wozu diese vorteilhaft ein weiteres, den verschwenkbaren Schiebebügel führendes scheibenartiges Teil aufweist, das neben der Halterung und Führung des Schiebebügels zweckmäßigerweise auch den Schwenkweg begrenzende Anschläge sowie den jeweiligen Stellungen zugeordnete zweite Rastelemente aufweist, in die ein über ein zweites schiebebügelseitiges Betätigungselement bewegbarer Rastzapfen eingreift. Diesem weiteren, den Schiebebügel zugeordneten scheibenartigen Teil kommt ebenfalls eine zentrale Funktion zu. Zum einen definiert es die Endstellungen über die die Verschwenkung begrenzenden Anschläge. Zum anderen sind an ihm die Rastelemente vorgesehen, in die ein bügelseitiger, über ein bügelseitiges Betätigungselement bewegbarer zweiter Rastzapfen eingreift, um den Bügel sicher in der jeweiligen Endstellung zu fixieren. Ersichtlich ist also die Halterung das zentrale Gestellteil, das nicht nur der Aufnahme und Halterung der einzelnen Elemente dient, sondern auch ihrer Führung, Lagerung und sicheren Verrastung.

Wie beschrieben befindet sich am unteren Ende der ersten Strebe ein bedarfsweise in und außer Eingriff mit einem geeigneten gestellseitig vorgesehen Rastelement bringbarer Rastzapfen, der über ein schiebebügelseitiges erstes Betätigungselement bewegt und außer Eingriff mit dem Rastelement gebracht werden kann. Wenngleich zwar die Möglichkeit besteht, das erste Betätigungselement über einen Zugdraht oder eine Zugstange unmittelbar mit dem Rastzapfen zu koppeln, insbesondere wenn der Schiebebügel nicht verschwenkbar ist, so ist es gleichwohl zweckmäßig, wenn ein schiebebügelseitiges erstes Betätigungselement über einen Zugdraht oder eine Zugstange mit einem Kopplungselement zusammenwirkt, das seinerseits über einen Zugdraht oder einer Zugstange mit dem Rastelement verbunden ist. D.h. das Betätigungselement und der Rastzapfen sind über die jeweiligen Zugdrähte oder Zugstangen nur indirekt über das Kopplungselement miteinander verbunden. Zweckmäßigerweise wird als Kopplungselement ein Schieber vorgesehen, der in der Halterung bewegbar aufgenommen ist, mithin also gekapselt und so funktionssicher gelagert ist.

Ist der Schiebebügel bewegbar, so sieht eine besonders zweckmäßige Erfindungsausgestaltung vor, am Schiebebügel einen mit dem Zugdraht oder der Zugstange verbundenen Mitnehmer vorzusehen, der bei verschwenkbarem Schiebebügel lösbar mit dem Schieber in Eingriff bringbar ist. D.h. der Mitnehmer und damit das erste Betätigungselement kann lösbar mit dem Schieber gekoppelt werden, so dass die Bewegung des Rastzapfens und damit die Möglichkeit zum Zusammenlegen nur in einer bestimmten Stellung, wenn eben Mitnehmer und Schieber in Eingriff miteinander sind, gegeben ist. D.h. dass der Wagen in einer Bügelstellung zusammenlegbar ist, in der anderen jedoch nicht. Um eine Verschwenkung zu ermöglichen, wenn der Schieber gekapselt in der Halterung angeordnet ist, ist es zweckmäßig, wenn in der Halterung eine Ausnehmung vorgesehen ist, in der der seitlich am Schiebebügel vorstehende Mitnehmer während der Schwenkbewegung zumindest bis zum Eingriff mit dem Schieber geführt ist. Hierüber ist sichergestellt, dass die gesamte Kopplungsmimik im Inneren der Halterung angeordnet und die Kopplung dort vonstatten gehen kann.

Wie beschrieben dient das an der ersten Strebe angeordnete, diese mit der starren unteren Gestellstrebe verbindende Verbindungsteil dem Längenausgleich beim Auseinanderfahren der beiden Streben. Zweckmäßigerweise ist hierfür an der ersten Strebe ein Verbindungsteil angeordnet, an dem die Verbindungsstrebe mit einem Ende verschwenkbar gelagert ist, wobei an der fahrwerksnahen starren Gestellstrebe ein weiteres Verbindungsteil angeordnet ist, an dem die Verbindungsstrebe andernends verschwenkbar gelagert ist. Weiterhin ist zweckmäßigerweise an der Verbindungsstrebe ein Rastteil angeordnet, an dem das Rastelement, in das der Rastzapfen der ersten Strebe eingreift, vorgesehen ist. Dieses Rastteil wird zusammen mit der Verbindungsstrebe bewegt und ist genau dann in der richtigen Position, wenn der Eingriff des Rastzapfens erfolgen muss. In dieser Stellung liegen die erste Strebe und die Verbindungsstrebe annähernd parallel. Natürlich besteht die Möglichkeit, das Rastelement beispielsweise auch an dem Verbindungsteil, über das die Verbindungsstrebe mit der fahrwerknahen Gestellstrebe verbunden ist, vorzusehen, welches Verbindungsteil während des Zusammenlegevorgangs unbewegt ist.

Weiterhin können an jeden Gestellabschnitt zwei eine Sitzaufnahme tragende Haltestreben vorgesehen sein, von denen je eine mit ihrem unteren Ende mit der ersten bzw. der zweiten Strebe verbunden sind, und die mit den Streben um den gemeinsamen Drehpunkt schwenkgelagert sind. Diese Haltestreben werden zusammen mit der jeweiligen Strebe bewegt und sind vorteilhaft ebenfalls um den zentralen Drehpunkt bewegbar. Ihre oberen Enden, in deren Bereich die Sitzaufnahme angeordnet ist, sind vorzugsweise abgewinkelt und weisen voneinander weg, und verlaufen bei aufgebautem Wagengestell im Wesentlichen horizontal. Diese Abwinkelung im Bereich des oberen Endes führt dazu, dass die abgewinkelten Enden beim Zusammenlegen - nachdem sie mit den Streben, mit denen sie verbunden sind, bewegt und im Wesentlichen in die Horizontale geführt werden - nach unten geschwenkt und quasi tief in das Innere des Gestells bewegt werden. Sie werden zwangsläufig aus der Horizontalen geführt, was dazu führt, dass auch die an ihnen angeordnete Sitzaufnahme sehr tief in das Gestell bewegt wird. Hierdurch wird erreicht, dass die Sitzaufnahme deutlich weiter abgesenkt werden kann, als dies bei bekannten Wagen mit Scherengestellen der Fall ist. Nachdem die Enden der Haltestreben während dieser Absenkbewegung auseinander bewegt werden, ist eine der Haltestreben zur Ermöglichung eines Längenausgleichs beim Zusammenlegen zweckmäßigerweise über eine Verbindungsstrebe mit der Sitzaufnahme verbunden, während die andere Haltestrebe direkt mit der Sitzaufnahme verbunden ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Ansicht eines erfindungsgemäßen Kinder- oder Puppenwagens ohne Sitz,
- Fig. 2: eine Explosionszeichnung der Halterung eines Gestellabschnitts,
- Fig. 3: eine Teilansicht des Gestellabschnitts mit Darstellung der ausrastbaren ersten Strebe in der verrasteten, aufgebauten Stellung,
- Fig. 4: die Darstellung aus Fig. 3 kurz nach dem Lösen der Verrastung und Einleiten des Zusammenlegvorgangs,
- Fig. 5: der Wagen in einer Seitenansicht in der zusammengelegten Stellung,
- Fig. 6: eine Darstellung der Halterung und des Schiebebügels, der sich in einer ersten Stellung befindet,
- Fig. 7: eine Ansicht entsprechend Fig. 6 mit in die zweite Endstellung verschwenktem Schiebebügel,
- Fig. 8: eine Schnittansicht durch das in der Halterung aufgenommene Ende des Bügels,
- Fig. 9: eine Detailansicht eines Gestellabschnitts mit Darstellung der Haltestreben für die Sitzaufnahme in der ausgeklappten Stellung, und
- Fig. 10: die Darstellung aus Fig. 9 in der zusammengelegten Stellung.

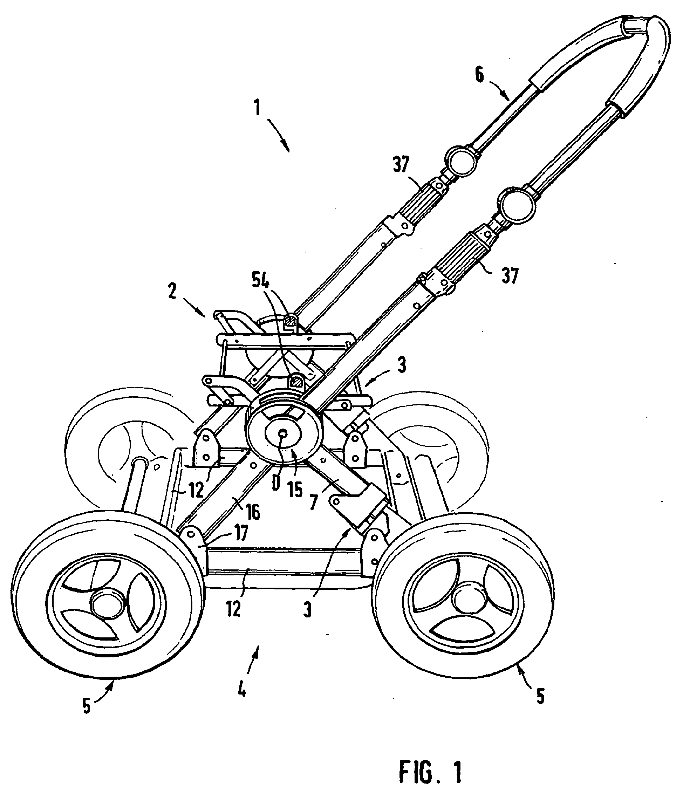

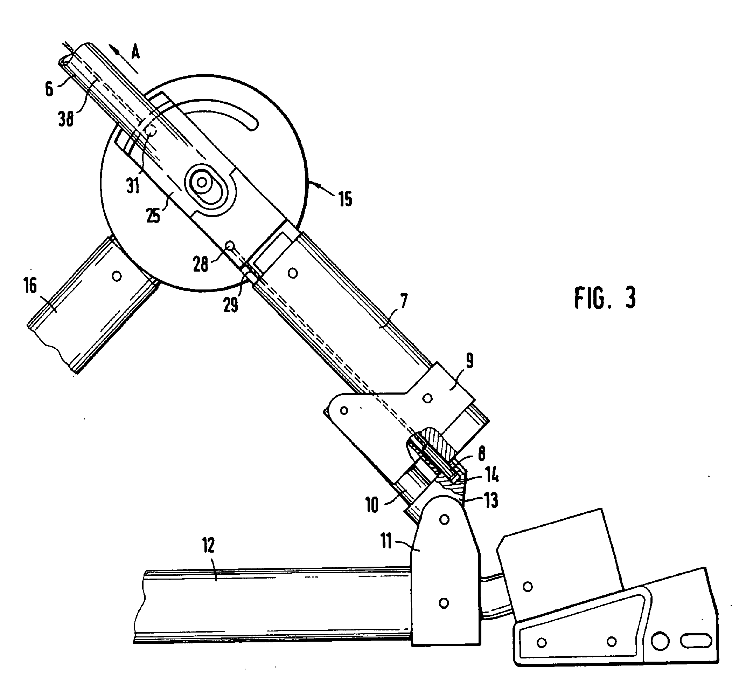

Fig. 1 zeigt einen erfindungsgemäßen Kinderwagen 1, bestehend aus einem Wagengestell 2 mit zwei seitlichen Gestellabschnitten 3 und einem Fahrwerk 4, bestehend aus einem vorderen und einem hinteren Fahrwerkteil 5 sowie einem Schiebebügel 6. Jeder Gestellabschnitt umfasst eine erste Strebe 7, die - siehe Fig. 3 - über einen Rastzapfen 8 in einer aufgebauten Stellung arretiert werden kann und mit ihr das ganze Wagengestell 2. An der ersten Strebe 7 ist ein Verbindungsteil 9 angeordnet, an dem eine Verbindungsstrebe 10 schwenkbar gehaltert ist, die anderenends an einem weiteren Verbindungsteil 11, das an einer starren, fahrwerknahen Gestellstrebe 12 angeordnet ist, schwenkbar befestigt ist. An der Verbindungsstrebe 10 ist ferner ein Rastteil 13 vorgesehen, an dem eine Rastaufnahme 14 für den Rastzapfen 8 vorgesehen ist. Die erste Strebe 7 ist ferner mit ihrem anderen Ende an einem Halteabschnitt einer nachfolgend noch näher zu beschreibenden Halterung 15 befestigt. An eben dieser Halterung 15 ist ferner eine zweite Strebe 16 befestigt, die anderenends über ein Verbindungsteil 17, das ebenfalls an der starren Gelenkstrebe 12 angeordnet ist und die Strebe 16 direkt mit der Gestellstrebe 12 verbindet, schwenkbar gehaltert ist. Die erste Strebe 7 wie auch die zweite Strebe 16 sind um einen gemeinsamen Drehpunkt D, gebildet von einem Achs- oder Lagerbolzen, im Zentrum der Halterung verschwenkbar. Um diesen gemeinsamen Drehpunkt D beziehungsweise Bolzen ist ferner der Schiebebügel 6, der wie Fig. 1 zeigt, von oben her in die Halterung 15 eingreift und dort drehbar aufgenommen ist, verschwenkbar, worauf nachfolgend noch eingegangen wird.

Zunächst wird der Aufbau der zentralen Halterung 15 näher erläutert, da dieser Aufbau wesentlich für die nachfolgend zu beschreibenden Bewegungsvorgänge ist. Die Halterung 15 besteht aus einem ersten scheibenartigen Teil 18, an dem ein seitlich vorspringender Ansatz 19 vorgesehen ist, der in die innen hohle zweite Strebe 16 eingreift, die mit dem Ansatz 19 fest vernietet ist. Auf den zentralen Zapfen 20, der den die ganze Halterung 15 durchsetzenden Achs- oder Lagerbolzen aufnimmt, wird ein zweites scheibenartiges Teil 21, das eine zentrale Bohrung 22 aufweist, aufgesteckt, so dass beide bezüglich einander verdreht werden können. Am Teil 21 ist ebenfalls ein seitlich vorspringender Ansatz 23 vorgesehen, der in die hohle erste Strebe 7 eingreift, die mit dem Ansatz 23 ebenfalls fest vernietet ist.

Das scheibenartige Teil 21 weist eine zentrale Längsführungsausnehmung 24 auf, in der ein Schieber 25 längsbeweglich angeordnet ist. Der Schieber 25 weist eine zentrale langlochartige Durchbrechung 26 auf, durch die der Zapfen 20 (und der Achs- oder Lagerbolzen) greift. Am einen Ende des Schiebers 25 ist eine Klemmhalterung 27 für einen Halteabschnitt 28 eines Zugdrahts 29, der im Inneren der ersten Strebe 7 zum Rastzapfen 8 läuft, vorgesehen. Am gegenüberliegenden Ende ist ein bogenförmiger Mitnehmervorsprung 30 vorgesehen, an dem ein zapfen- oder bolzenartiger Mitnehmer 31, der am Schiebebügel 6 seitlich vorspringend vorgesehen ist, eingreifen kann.

Schließlich umfasst die Halterung 15 ein weiteres scheibenartiges Teil 55, das der Halterung und Führung des Schwenkbügels 6 dient. Dieser greift mit seinem unteren Ende eines Längsholms von oben in Fig. 1 gesehen in die oberseitige Ausnehmung 32 ein. Am unteren Ende des halbringartigen Vorsprungs 33 sind zwei Rastlöcher 34 vorgesehen, in die ein Rastzapfen des Schiebebügels, diesen in der entsprechenden Stellung arretieren, eingreifen kann, worauf nachfolgend noch eingegangen wird. Ferner sind an den freien Enden des Vorsprungs 33 Anschläge 35 vorgesehen, die die Verschwenkbewegung des Schiebebügels begrenzen. Weiterhin ist eine scheibenartige Abdeckung 36 vorgesehen, über die die anderenends über das scheibenartige Teil 18 geschlossene Halterung 15 auch an dieser Seite gekapselt wird. Auf dieser Abdeckung, die zur Gestellaußenseite weist, kann z.B. ein der Sicherheit dienender Reflektor o.ä. angeordnet sein.

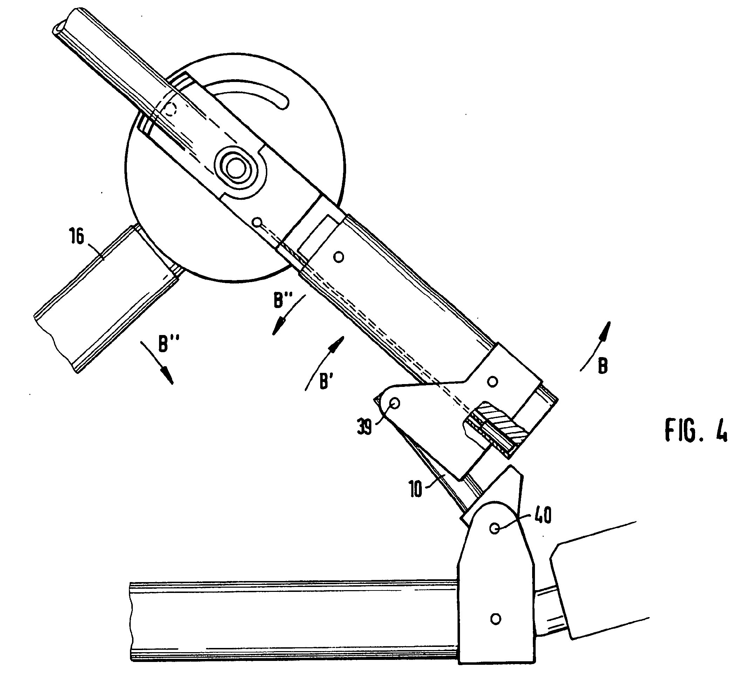

Anhand der Figuren 3 - 5 wird zunächst der Zusammenklappmechanismus erläutert. Wie beschrieben ist in der in Fig. 1 gezeigten aufgebauten Stellung das Wagengestell infolge des Eingriffs des Rastzapfens 8 in die Rastaufnahme 14 arretiert. Eine solche Arretierung ist an beiden Gestellabschnitten vorgesehen. Im Folgenden wird der jeweilige Vorgang nur bezüglich des einen Gestellabschnitts beschrieben, es versteht sich von selbst, dass der gleiche Vorgang auch am anderen Gestellabschnitt vorzunehmen ist bzw. abläuft.

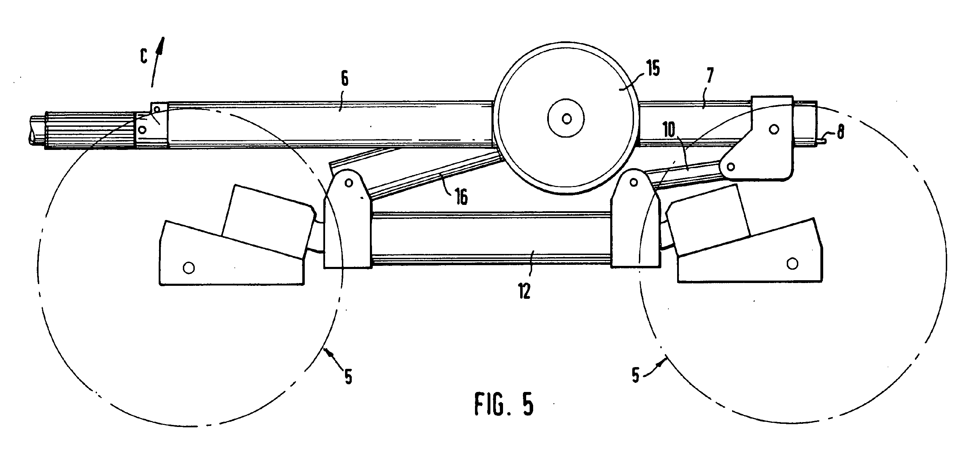

Um nun die Verrastung zu lösen ist am Schiebebügel 6 ein Betätigungselement 37 zu betätigen. An jedem der geraden Bügelholme ist ein solches Betätigungselement 37 vorgesehen, um die jeweilige gestellabschnittseitige Verrastung aufzuheben. Im gezeigten Ausführungsbeispiel sei angenommen, dass das Betätigungselement 37 als ein um die Holmlängsachse zu drehender Drehgriff ausgebildet ist. Befindet sich nun der Schiebebügel in der in Fig. 3 gezeigten Stellung, in der er anders als in Fig. 1 gezeigt nach links geschwenkt ist, so befindet sich der Mitnehmer 31 in Eingriff mit dem Mitnehmervorsprung 30 des Schiebers 25. Der Mitnehmer 31 ist über einen Zugdraht 38 mit dem Betätigungselement 37 z.B. über eine Art Kulissenführung, die beim Drehen eine Längsbewegung auf den Zugdraht bewirkt, bewegungsgekoppelt. Wird dieses nun wie beschrieben verdreht, wird der Zugdraht, wie durch den Pfeil A angedeutet ist, nach oben im Holm gezogen und dabei der Mitnehmer 31, der seitlich aus dem Bügelholm hervorragt und in einem entsprechenden Langloch geführt ist, mit bewegt. Er nimmt dabei den Schieber 25 mit, zieht in also ebenfalls nach oben. Diese Bewegung wird über den mit dem Schieber 25 gekoppelten Zugdraht 29 auf den Rastzapfen 8 übertragen, der nach oben und aus der Rastaufnahme 14 herausgezogen wird. Nun kann die Zusammenlegbewegung erfolgen. Dabei wird die erste Strebe 7 aus der in Fig. 3 gezeigten Stellung nach oben geschwenkt, wie durch den Pfeil B dargestellt ist. Gleichzeitig klappt die angelenkte Verbindungsstrebe 10, die bis dato in dem Verbindungsteil 9 aufgenommen und im Wesentlichen parallel zur ersten Strebe 7 lag, heraus, sie schwenkt um die beiden Drehlager 39, 40, siehe Pfeil B'. Gleichzeitig verdrehen sich auch die erste Strebe 7 und die zweite Strebe 16 um den gemeinsamen Drehpunkt D, siehe die Pfeile B". Die Halterung bewegt sich während des Zusammenlegevorgangs nach unten, das untere Ende der Streben 7 wird vom unteren Ende der Strebe 16 wegbewegt, bis sie die Endstellung erreichen, die in Fig. 5 gezeigt ist. In dieser Stellung liegen die beiden Streben 7, 16 näherungsweise fluchtend hintereinander. Die Verbindungsstrebe 10 liegt in im Wesentlichen um 180° geänderter Orientierung bezüglich der ersten Strebe 7. Der Schiebebügel 6, der zum Zusammenlegen in der - bezogen auf Fig. 1 - linken Position (die in Fig. 1 nicht gezeigt ist) ruht, liegt ebenfalls im Wesentlichen horizontal in Verlängerung der Strebe 7. Infolge der Bewegungskopplung der Strebe 7 über die Verbindungsstrebe 10 werden die Fahrgestellteile 5 während des Zusammenlegens nicht bewegt, weshalb sie über eine starre Gestellstrebe 12 miteinander verbunden werden können. Insgesamt kann also ein starrer, stabiler fahrwerknaher Rahmen, bestehend aus mehreren starren Gestellstreben 12, ausgebildet werden.

Zum Aufstellen des Wagengestells läuft der beschriebene Vorgang andersherum ab. Der Schiebebügel 6 wird, ausgehend von Fig. 5, nach oben geschwenkt, wie durch den Pfeil C darstellt ist. Dies führt dazu, dass die oberen Enden der Streben 7, 16 quasi angehoben werden, die Halterung 15 bewegt sich nach oben, die erste Strebe 7 und die Verbindungsstrebe 10 verschwenken wieder bezüglich einander. Diese Bewegung unter erneuter Annäherung der unteren Enden der Streben 7, 16 erfolgt so lange, bis der Rastzapfen 8 wieder in die Rastaufnahme 14 am Rastteil 13 einrastet und die aufgebaute Stellung sicher infolge der an beiden Gestellabschnitten erfolgenden Verrastung arretiert ist.

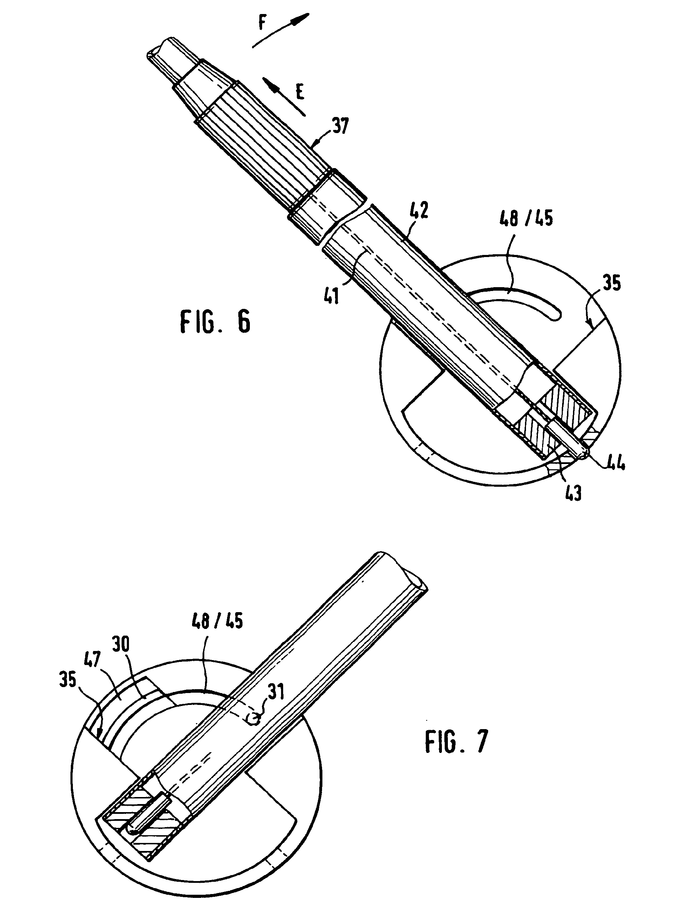

Wie beschrieben besteht die Möglichkeit, den Schiebebügel 6 zwischen zwei Stellungen, die ein Schieben des Wagens bezogen auf die Ausrichtung des Sitzes in unterschiedliche Richtungen ermöglichen, zu verschwenken. Der zugehörige Ablauf ist in den Figuren 6 und 7 gezeigt. Auch hierbei spielt die Halterung 15 wiederum eine zentrale Rolle. Gezeigt ist wiederum ein bügelseitiges Betätigungselement 37, das nach vorheriger Betätigung einer der Sicherheit dienenden Entriegelungstaste (nicht gezeigt) zum Lösen der Bügelverrastung für die Einleitung einer Schwenkbewegung, in diesem Fall in Richtung des Pfeils E, nach oben zu ziehen ist. Dem Betätigungselement 37 kommt hier eine Doppelfunktion zu. Es dient als Drehelement zum Lösen der Gestellverrastung, und als Zugelement zum Lösen der Schieberverrastung. Hierzu sind entsprechende separate Betätigungsmechanismen am Betätigungselement vorgesehen. Das Betätigungselement 37 ist über einen weiteren an ihm befestigten Zugdraht 41 mit einem am unteren Ende des Bügelholms 42 in einer Aufnahme 43 angeordneten Rastzapfen 44 verbunden. Wird nun das Betätigungselement 37 in Richtung des Pfeils E bewegt, wird der Rastzapfen 44 aus seinem Eingriff in einer Rastbohrung 34 gezogen. Der Schiebebügel kann nun, wie durch den Pfeil F dargestellt ist, um den gemeinsamen Drehpunkt D nach rechts verschwenkt werden. Er bewegt sich dabei in der Ausnehmung 32. Sobald er die durch den Anschlag 35 definierte Endstellung erreicht, kann der Rastzapfen 44 in der benachbarten Rastbohrung 34 einrasten und den Schiebebügel in dieser Stellung arretieren.

Wie eingangs beschrieben befinden sich an den Schiebebügelholmen an beiden Seiten die nach innen ragenden Mitnehmer 31, die zum Zusammenlegen am jeweiligen Mitnehmervorsprung 30 des Schiebers 25 angreifen. Während der Verschwenkbewegung wird jeder Mitnehmer 31 in einer am Teil 21 ausgebildeten Führungsnut 45 (und einer damit deckungsgleichen Längsausnehmung 48 am Teil 55) geführt. Diese Führungsnut läuft wie Fig. 7 zeigt in den Bereich direkt unter den Mitnehmervorsprung 30 aus, so dass der Mitnehmer 31, wenn er von der in Fig. 7 gezeigten Stellung in die in Fig. 6 gezeigte Stellung zurückgeschwenkt wird, automatisch unter den Mitnehmervorsprung 30 geführt wird, so dass er beim Zusammenlegen am Mitnehmervorsprung 30, den Schieber 25 bewegen, angreifen kann.

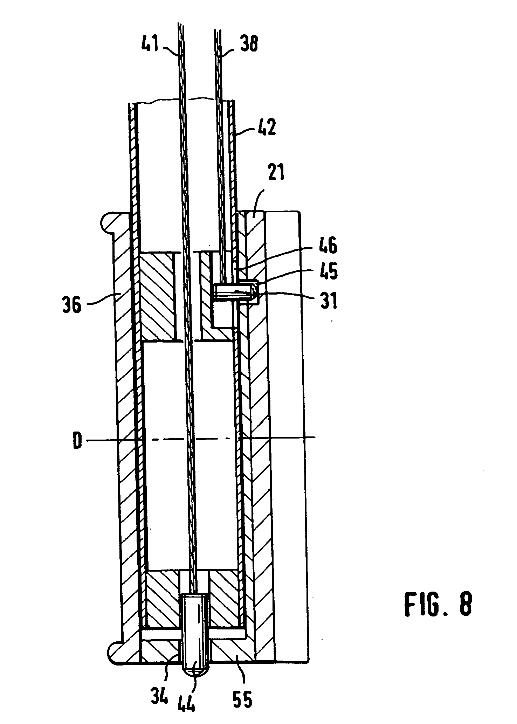

Fig. 8 zeigt eine Detailansicht im Schnitt durch die Halterung 15 sowie das untere Ende eines Längsholms des Schiebers 6. Gezeigt ist zum einen das scheibenförmige Abdeckteil 36, dem das scheibenförmige Teil 55 folgt, dem wiederum das scheibenförmige Teil 21 folgt. Nicht mehr gezeigt ist das scheibenförmige Teil 18 sowie der Schieber 25, der am Teil 21 aufgenommen ist, nachdem in Fig. 8 der Schiebebügel in einer Stellung gezeigt ist, in der der Mitnehmer 31 nicht mit dem Schiebebügel in Eingriff steht. Anders als gezeigt können Teil 55 und Teil 21 konstruktiv auch ein einstückiges gemeinsames Teil sein. In diesem Fall wird der Schieber 25 von der dem Teil 18 gegenüberliegenden Seite montiert.

Ersichtlich läuft im Inneren des Holms 42 der erste Zugdraht 38, der mit dem Mitnehmer 31 verbunden ist. Der Mitnehmer 31 greift durch ein Langloch 46. Im gezeigten Beispiel greift der Mitnehmer 31 in die Nut 45 am Teil 21 ein. In der Bügelstellung, die ein Zusammenlegen ermöglicht, würde der Mitnehmer 31 unmittelbar unterhalb des Mitnehmervorsprungs 30 des Schiebers 25 liegen. Gezeigt ist ferner der zweite Zugdraht 41, der mit dem Rastzapfen 44, der in der Rastbohrung 34 am Teil 55 verrastet ist, verbunden ist.

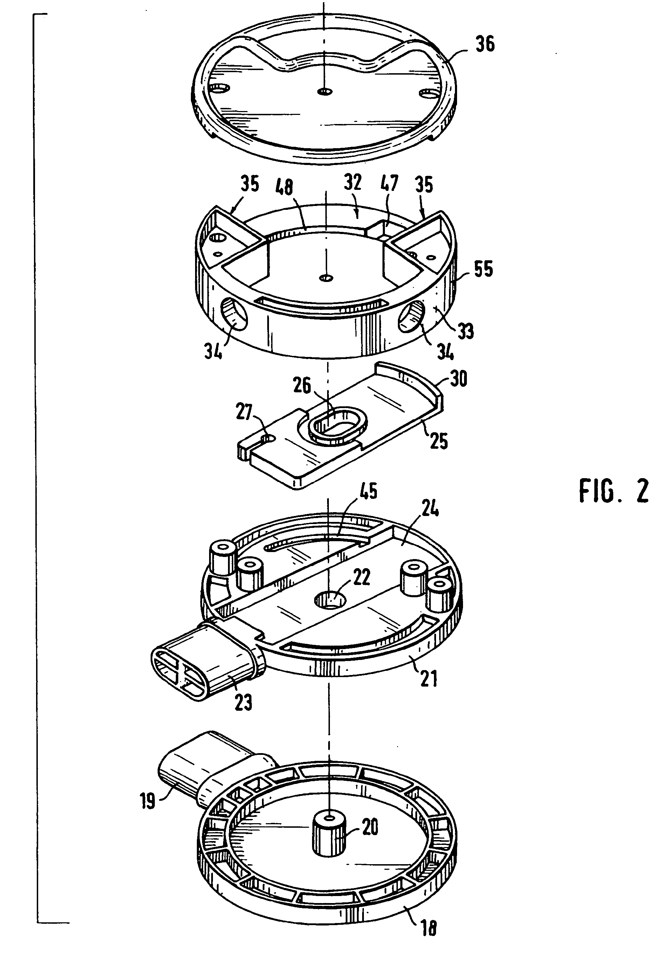

Wie Fig. 2 zu entnehmen ist, weist das Teil 55 eine Durchbrechung 47 auf, in die der Mitnehmervorsprung 30 greift und durch welche der Rastzapfen 31 hindurch in den Bereich des Teils 21 greift. Sie ist so bemessen, dass sich der Mitnehmervorsprung beim Betätigen in ihr bewegen kann. An die Durchbrechung 47 schließt sich eine entsprechende gebogene Längsausnehmung 48, die im Wesentlichen mit der Führungsnut 45 deckungsgleich ist. In ihr wandert der Mitnehmer 31, wenn der Bügel verschwenkt wird.

Von den Einzelteilen der in Fig. 2 gezeigten Halterung 2 sind die beiden Teile 18, 21 bezüglich einander um den Drehpunkt D verdrehbar. Miteinander bewegungsgekoppelt sind das Teil 21 mit dem Schieber 25, das Teil 55 sowie die Abdeckscheibe 36. Beim Zusammenlegen oder Aufstellen verdreht sich also das Teil 18 bezüglich des Teils 21 und der an ihm angeordneten oben genannten Teile.

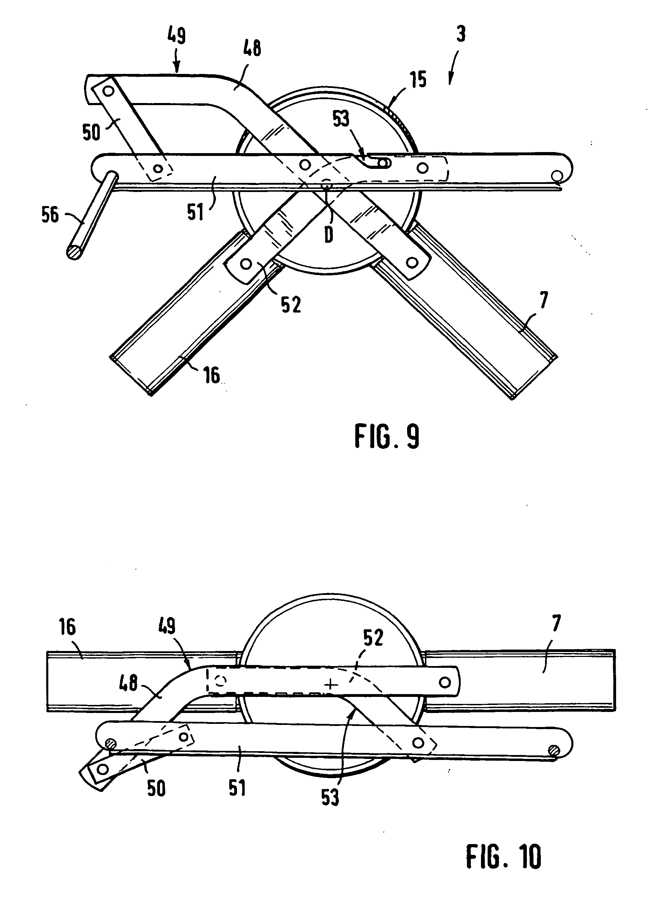

Fig. 9 zeigt eine Seitenansicht eines Gestellabschnitts 3 mit der ersten Strebe 7 und der zweiten Strebe 16 sowie der Halterung 15. Dargestellt ist ferner eine erste Haltestrebe 48, die mit ihrem unteren Ende fest mit der Strebe 7 verbunden ist. Ihr oberes Ende 49 ist abgewinkelt und befindet sich in der aufgebauten Stellung im Wesentlichen in einer horizontalen Position. Es ist über eine Verbindungsstrebe 50, die schwenkbar gelagert ist, mit einer Sitzaufnahme 51 verbunden.

Gezeigt ist ferner eine zweite Haltestrebe 52, die mit ihrem unteren Ende an der zweiten Strebe 16 fest angeordnet ist, und die mit ihrem oberen Ende hinter der Sitzaufnahme 51 angeordnet ist. Auch ihr oberes Ende 53 ist abgewinkelt und liegt annähernd horizontal. Es ist direkt mit der Sitzaufnahme 51 verbunden. Beide Haltestreben 48, 52 sind wie die beiden Streben 7, 16 und der Schiebebügel 6 um den gemeinsamen Drehpunkt D, gebildet durch den die ganze Halterung 15 durchsetzenden Achs- oder Lagerbolzen, verschwenkbar gelagert.

Wird nun ausgehend von der in Fig. 9 gezeigten Stellung das Gestell zusammengelegt, so werden die Haltestreben 48, 52 infolge ihrer festen Anordnung an den Streben 7, 16 mit diesen bewegt. Dies führt dazu, dass sie in der zusammengelegten Stellung die gleiche Position einnehmen, wie die jeweils zugeordneten Streben. Ihre abgewinkelten oberen Enden 49, 53 tauchen tief in das zusammengelegte Gestell ein. Dies führt dazu, dass auch die Sitzaufnahme 51 tief in das Gestellinnere bewegt wird. D.h. der auf ihr befindliche, nicht näher gezeigte Sitz kann ebenfalls sehr weit abgesenkt werden. Der Längenausgleich, der aufgrund der gemeinsamen Verschwenkbewegung der Haltestreben 48, 52 erforderlich ist, wird über die gelenkige Verbindungsstrebe 50 sichergestellt. Die Haltestreben sind zweckmäßigerweise aus einfachen Flachstählen gebildet. Die Sitzaufnahme 51 besteht, wie Fig. 1 zeigt, aus den beiden entsprechenden, mit den Haltestreben verbundenen Aufnahmestreben sowie den diese verbindenden Querstreben 56. Ferner sind wie Fig. 1 zeigt zwei Lösehebel 54 vorgesehen, die zu betätigen sind, wenn der nicht näher gezeigte, auf der Sitzaufnahme verrastete Sitz entfernt werden soll.

## Patentansprüche

1. Kinder- oder Puppenwagen, mit einem zusammenlegbaren Wagengestell mit Fahrwerk und Schiebebügel, wobei das Wagengestell zwei zusammenlegbare seitliche Gestellabschnitte aufweist, wobei jeder Gestellabschnitt (3) eine erste und eine zweite Strebe (7, 16) aufweist, wobei ein über ein schiebebügelseitig angeordnetes manuelles Betätigungselement (37) bewegbarer Rastzapfen (8) vorgesehen ist, der in der Raststellung in ein Rastelement (14) greift, wobei die erste Strebe (7) über eine schwenkbare Verbindungsstrebe (10) und die zweite Strebe (16) direkt mit einer fahrwerknahen Gestellstrebe (12) gekoppelt sind, **dadurch gekennzeichnet, daß** der Rastzapfen (8) am unteren fahrwerkseitigen Ende der ersten Streben (7) vorgesehen ist, und daß die erste und die zweite Strebe (7, 16) derart um einen gemeinsamen oberen Drehpunkt (D) drehbar gelagert sind, dass sie nach Lösen des Rastzapfens (8) beim Zusammenlegen mit ihren unteren Enden auseinander in eine näherungsweise miteinander fluchtende Stellung geschwenkt werden.

2. Kinder- oder Puppenwagen nach Anspruch 1, **dadurch gekennzeichnet, dass** die beiden Streben (7, 16) an einer gemeinsamen, ihre Bewegung bezüglich einander erlaubenden Halterung (15) angeordnet sind.

3. Kinder- oder Puppenwagen nach Anspruch 2, **dadurch gekennzeichnet, dass** die Halterung (15) zwei bezüglich einander verdrehbare scheibenartige Teile (18, 21) aufweist, an denen je eine Strebe (7, 16) angeordnet ist.

4. Kinder- oder Puppenwagen nach einem der vorangehenden Ansprüche, **dadurch gekennzeichnet, dass** der Schiebebügel (6) ebenfalls um den oberen Drehpunkt (D) der Gestellabschnitte (3) zwischen zwei Stellungen schwenkbar gelagert ist.

5. Kinder- oder Puppenwagen nach Anspruch 4, **dadurch gekennzeichnet, dass** die Halterung (15) ein weiteres, den verschwenkbaren Schiebebügel (6) führendes scheibenartiges Teil (55) aufweist, das den Schwenkweg begrenzende Anschläge (35) sowie den jeweiligen Stellungen zugeordnete zweite Rastelemente (34) aufweist, in die ein über ein gegebenenfalls zweites schiebebügelseitiges Betätigungselement (37) bewegbarer zweiter Rastzapfen (44) eingreift.

6. Kinder- oder Puppenwagen nach einem der vorangehenden Ansprüche, **dadurch gekennzeichnet, dass** ein schiebebügelseitiges erstes Betätigungselement (37) über einen Zugdraht (38) oder eine Zugstange mit einem Kopplungselement (25) zusammenwirkt, das seinerseits über eine Zugdraht (29) oder eine Zugstange mit dem ersten Rastzapfen (8) verbunden ist.

7. Kinder- oder Puppenwagen nach Anspruch 6, **dadurch gekennzeichnet, dass** das Kopplungselement ein Schieber (25) ist, der in der Halterung (15) bewegbar aufgenommen ist.

8. Kinder- oder Puppenwagen nach Anspruch 7, **dadurch gekennzeichnet, dass** am Schiebebügel (6) ein mit dem Zugdraht (38) oder der Zugstange verbundener Mitnehmer (31) vorgesehen ist, der bei verschwenkbarem Schiebebügel (6) lösbar mit dem Schieber (25) in Eingriff bringbar ist.

9. Kinder- oder Puppenwagen nach Anspruch 8, **dadurch gekennzeichnet, dass** in der Halterung (15), insbesondere einem der scheibenförmigen Teile eine Ausnehmung (45, 48) vorgesehen ist, in der der seitlich am Schiebebügel (6) vorstehende Mitnehmer (31) während der Schwenkbewegung zumindest bis zum Eingriff mit dem Schieber (25) geführt ist.

10. Kinder- oder Puppenwagen nach einem der vorangehenden Ansprüche, **dadurch gekennzeichnet, dass** an der ersten Strebe (7) ein Verbindungsteil (9) angeordnet ist, an dem die Verbindungsstrebe (10) mit einem Ende schwenkbar gelagert ist, und dass an der fahrwerknahen Gestellstrebe (12) ein weiteres Verbindungsteil (11) angeordnet ist, an dem die Verbindungsstrebe (10) andernends schwenkbar gelagert ist.

11. Kinder- oder Puppenwagen nach Anspruch 10, **dadurch gekennzeichnet, dass** an der Verbindungsstrebe (10) ein Rastteil (13) angeordnet ist, an dem das Rastelement (14), in das der Rastzapfen (8) der ersten Strebe (7) eingreift, vorgesehen ist.

12. Kinder- oder Puppenwagen nach einem der vorangehenden Ansprüche, **dadurch gekennzeichnet, dass** an jedem Gestellabschnitt (3) zwei eine Sitzaufnahme (51) tragende Haltestreben (48, 52) vorgesehen sind, von denen je eine mit ihrem unteren Ende mit der ersten bzw. der zweiten Strebe (7, 16) verbunden ist, und die mit den Streben (7, 16) um den gemeinsamen Drehpunkt (D) schwenkgelagert sind.

13. Kinder- oder Puppenwagen nach Anspruch 12, **dadurch gekennzeichnet, dass** die oberen Enden (40, 53) der Haltestreben (48, 52), in deren Bereich die Sitzaufnahme (51) angeordnet ist, abgewinkelt sind und voneinander weg weisen, und bei aufgebautem Wagengestell im Wesentlichen horizontal verlaufen.

14. Kinder- oder Puppenwagen nach Anspruch 13, **dadurch gekennzeichnet, dass** eine der Haltestreben (48) zur Ermöglichung eines Längenausgleichs beim Zusammenlegen über eine Verbindungsstrebe (50) mit der Sitzaufnahme (51) verbunden ist, während die andere Haltestrebe (52) direkt mit der Sitzaufnahme (51) verbunden ist.

## Claims

1. Children's or doll's pushchair with a folding pushchair frame with chassis and push rail, wherein the pushchair frame provides two folding, lateral frame portions, wherein each frame portion (3) provides a first stay and a second stay (7, 16), wherein a locking pin (8) displaceable via a manual activation element (37) disposed on the push rail is provided, which, in the locking position, engages in a locking element (14), wherein the first stay (7) is coupled via a swivelling connecting stay (10) and the second stay (16) is coupled directly to a frame stay (12) close to the chassis,
**characterised in that**
the locking pin (8) is provided at the lower, chassis end of the first stay (7), and that the first and the second stay (7, 16) are mounted in a pivoting manner about a common, upper pivotal point (D) in such a manner that, after the release of the locking pin (8), during the folding together, they are swivelled with their lower ends away from one another into an approximately, mutually-aligned position.

2. Children's or doll's pushchair according to claim 1,
**characterised in that**
both stays (7, 16) are arranged on a common, mounting (15) allowing their displacement relative to one another.

3. Children's or doll's pushchair according to claim 2,
**characterised in that**
the mounting (15) provides two disc-like parts (18, 21) rotatable relative to one another, on each of which one stay (7, 16) is arranged.

4. Children's or doll's pushchair according to any one of the preceding claims,
**characterised in that**
the push rail (6) is also mounted in a manner rotatable between two positions about the upper pivotal point (D) of the frame portions (3).

5. Children's or doll's pushchair according to claim 4,
**characterised in that**
the mounting (15) provides a further disc-like part (55) guiding the rotatable push rail (6), which provides stops (35) limiting the swivelling path, and second locking elements (34) allocated to the respective positions, into which a second locking pin (44) displaceable via an optional second activation element (37) on the push rail, engages.

6. Children's or doll's pushchair according to any one of the preceding claims,
**characterised in that**
a first activation element (37) on the push rail cooperates via a tension wire (38) or a tension rod with a coupling element (25), which is connected at one end via a tension wire (29) or a tension rod to the first locking pin (8).

7. Children's or doll's pushchair according to claim 6,
**characterised in that**
the coupling element is a slider (25), which is accommodated in a displaceable manner within the mounting (15).

8. Children's or doll's pushchair according to claim 7,
**characterised in that**
a catch (31) connected to the tension wire (38) or the tension rod, which, in the case of a swivelling push rail (6), can be brought into engagement with the slider (25) in a detachable manner, is provided on the push rail (6).

9. Children's or doll's pushchair according to claim 8,
**characterised in that**
a recess (45, 48), within which the catch (31) projecting laterally on the push rail (6) is guided during the swivelling movement at least until the engagement with the slider (25), is provided in the mounting (15), especially in one of the disc-like parts.

10. Children's or doll's pushchair according to any one of the preceding claims,
**characterised in that**
a connecting part (9), on which the connecting stay (10) is mounted at one end in a swivelling manner, is arranged on the first stay (7), and that a further connecting part (11), on which the connecting stay (10) is mounted at the other end in a swivelling manner, is arranged on the frame stay (12) close to the chassis.

11. Children's or doll's pushchair according to claim 10,
**characterised in that**
a locking part (13), on which the locking element (14), into which the locking pin (8) of the first stay (7) engages, is provided, is arranged on the connecting stay (10).

12. Children's or doll's pushchair according to any one of the preceding claims,
**characterised in that**
two holding stays (48, 52) carrying a seat support (51), each of which is connected by its lower end to the first or respectively second stay (7, 16), and which are mounted with the stays (7, 16) in a swivelling manner about the common pivotal point (D), are provided on each frame portion (3).

13. Children's or doll's pushchair according to claim 12,
**characterised in that**
the upper ends (40, 53) of the holding stays (48, 52), in the region of which the seat support (51) is arranged, are angled and point away from one another, and extend in a substantially horizontal direction when the pushchair frame is opened up.

14. Children's or doll's pushchair according to claim 13,
**characterised in that,**
to allow a longitudinal compensation during the folding, one of the holding stays (48) is connected to the seat support (51) via a connecting stay (50), while the other holding stay (52) is connected directly to the seat support (51).

## Revendications

1. Poussette de bébé ou de poupée, comportant un châssis pliable, muni d'un dispositif de roulement et d'une poignée de transport en arceau, ledit châssis comportant deux parties latérales pliables, chaque partie de châssis (3) comportant une première et une deuxième entretoise (7, 16), sachant qu'il est prévu un téton de blocage (8), qui est propre à être actionné par un élément de manoeuvre (37) manuel disposé du côté de la poignée de transport et qui, dans la position de blocage, s'engage dans un élément de blocage (14), la première entretoise (7) étant couplée, par l'intermédiaire d'une entretoise de liaison (10) pivotante, à une traverse (12) à proximité du dispositif de roulement et la deuxième entretoise (16) étant couplée directement à ladite traverse (12), **caractérisée en ce que** le téton de blocage (8) est prévu sur l'extrémité inférieure, du côté dispositif de roulement, de la première entretoise (7), et **en ce que** la première et la deuxième entretoise (7, 16) sont montées de manière à pouvoir tourner autour d'un point de rotation supérieur (D) commun, de telle sorte que, après la désolidarisation du téton de blocage (8) lors du pliage, elles pivotent pour s'écarter l'une de l'autre par leurs extrémités inférieures dans une position à peu près alignée l'une avec l'autre.

2. Poussette de bébé ou de poupée selon la revendication 1, **caractérisée en ce que** les deux entretoises (7, 16) sont disposées sur une fixation (15) commune permettant leur mouvement l'une par rapport à l'autre.

3. Poussette de bébé ou de poupée selon la revendication 2, **caractérisée en ce que** la fixation (15) comporte deux parties (18, 21) en forme de disque, qui sont aptes à tourner l'une par rapport à l'autre et sur chacune desquelles est agencée une entretoise (7, 16).

4. Poussette de bébé ou de poupée selon l'une quelconque des revendications précédentes, **caractérisée en ce que** la poignée de transport (6) en arceau est également montée de manière à pouvoir pivoter entre deux positions autour du point de rotation supérieur (D) des parties de châssis (3).

5. Poussette de bébé ou de poupée selon la revendication 4, **caractérisée en ce que** la fixation (15) comporte une autre partie (55) en forme de disque, qui guide la poignée de transport (6) en arceau et qui comporte des butées (35) limitant la trajectoire de pivotement, ainsi que deux éléments de blocage (34) associés aux positions respectives, dans lesquels s'engage un deuxième téton de blocage (44) mobile par l'intermédiaire d'un éventuellement deuxième élément de manoeuvre (37) du côté de la poignée de transport.

6. Poussette de bébé ou de poupée selon l'une quelconque des revendications précédentes, **caractérisée en ce qu'**un premier élément de manoeuvre (37), du côté de la poignée de transport, coopère par l'intermédiaire d'un câble de traction (38) ou d'une tige de traction avec un élément de couplage (25) qui, pour sa part, est relié au premier téton de blocage (8) par l'intermédiaire d'un câble de traction (29) ou d'une tige de traction.

7. Poussette de bébé ou de poupée selon la revendication 6, **caractérisée en ce que** l'élément de couplage est un curseur (25), qui est logé de manière mobile dans la fixation (15).

8. Poussette de bébé ou de poupée selon la revendication 7, **caractérisée en ce que** sur la poignée de transport (6) en arceau est prévu un entraîneur (31), qui est relié au câble de traction (38) ou à la tige de traction et qui peut être amené en prise amovible avec le curseur (25) au niveau de la poignée de transport (6) en arceau pivotante.

9. Poussette de bébé ou de poupée selon la revendication 8, **caractérisée en ce que** dans la fixation (15), en particulier dans l'une des parties en forme de disque, est prévu un évidement (45, 48), dans lequel l'entraîneur (31), en saillie latérale sur la poignée de transport (6) en arceau, est guidé pendant le mouvement de pivotement au moins jusqu'à ce qu'il entre en prise avec le curseur (25).

10. Poussette de bébé ou de poupée selon l'une quelconque des revendications précédentes, **caractérisée en ce que** sur la première entretoise (7) est disposé un élément d'assemblage (9), sur lequel l'entretoise de liaison (10) est montée de manière pivotante avec une extrémité, et **en ce que** sur la traverse (12), au voisinage du dispositif de roulement, est disposé un autre élément d'assemblage (11), sur lequel l'entretoise de liaison (10) est montée pivotante avec l'autre extrémité.

11. Poussette de bébé ou de poupée selon la revendication 10, **caractérisée en ce que** sur l'entretoise de liaison (10) est disposée une pièce de blocage (13), sur laquelle est prévu l'élément de blocage (14) dans lequel s'engage le téton de blocage (8) de la première entretoise (7).

12. Poussette de bébé ou de poupée selon l'une quelconque des revendications précédentes, **caractérisée en ce qu'**il est prévu sur chaque partie de châssis (3) deux entretoises de fixation (48, 52), qui portent un support de siège (51), qui sont reliées chacune par leur extrémité inférieure respectivement avec la première et la deuxième entretoise (7, 16) et qui sont montées pivotantes avec les entretoises (7, 16) autour du point de rotation (D) commun.

13. Poussette de bébé ou de poupée selon la revendication 12, **caractérisée en ce que** les extrémités supérieures (40, 53) des entretoises de fixation (48, 52), dans la zone desquelles est disposé le support de siège (51), sont repliées et sont orientées en s'écartant l'une de l'autre, et sont disposées sensiblement horizontalement lorsque le châssis de la poussette est en position montée.

14. Poussette de bébé ou de poupée selon la revendication 13, **caractérisée en ce que** l'une des entretoises de fixation (48), en vue de permettre une compensation de longueur au moment du pliage, est reliée au support de siège (51) par l'intermédiaire d'une entretoise de liaison (50), alors que l'autre entretoise de fixation (52) est reliée directement au support de siège (51).
